# EUROPÄISCHE PATENTANMELDUNG

(11) **EP 1 237 075 A1**
(43) Veröffentlichungstag der Anmeldung: **04.09.2002**
(21) Anmeldenummer: 01810161.8
(22) Anmeldetag: 16.02.2001
(51) Int. Cl.: G06F 9/44, G06F 9/45

(54) **Prä-Prozessor für vorgegebene Dokumententypdefinition, System zur Verarbeitung von Auszeichnungssprachen-Dokumenten, Verfahren und Computerprogrammprodukt dazu**

(71) Anmelder: ABB RESEARCH LTD., 8050 Zürich (CH)
(72) Erfinder: Eschermann, Maren, 5417 Untersiggenthal (CH); Naedele, Martin, 8048 Zürich (CH); Preiss, Otto, 5079 Zeihen (CH)
(74) Vertreter: ABB Patent Attorneys

(57) **Zusammenfassung**

Die Erfindung ist gerichtet auf einen Prä-Prozessor (2) für eine vorgegebene Dokumententypdefinition (DTD), aufweisend zumindest eine vorgegebene Schnittstelle zum Austauschen von Informationen mit Schnittstellen von Anwendungseinheiten (1, 6); und ein Konversionsmittel zur Umwandlung von Anwendungsinformationen von einer Anwendungseinheit (1, 6) in Aufrufe an einen Auszeichnungssprachen-Prozessor (3), wobei die Aufrufe zugleich der DTD genügen, und zur Umwandlung von Auszeichnungssprachen-Informationen vom Auszeichnungssprachen-Prozessor (3) in Rückinformationen zur Übertragung an eine Anwendungseinheit (1, 6), wobei die umgewandelten Rückinformationen von der Anwendungseinheit (1, 6) interpretierbar sind. Die Erfindung ist ebenfalls auf ein Gesamtsystem mit dem Prä-Prozessor (2) und ein Verfahren zur Prozessierung einer Auszeichnungssprachen-Datei (5) gerichtet.

## Beschreibung

### Technisches Gebiet

Die Erfindung betrifft einen Prä-Prozessor für eine vorgegebene Dokumententypdefinition (DTD) mit Schnittstellen zu Anwendungseinheiten und einem Auszeichnungssprachen-Prozessor, ein diesen Prä-Prozessor beinhaltendes System zum Prozessieren von Auszeichnungssprachen-Dokumenten, ein Verfahren zur Erzeugung gültiger Auszeichnungssprachen-Dokumente, die konform zu einer bestimmten DTD sind, sowie ein Computerprogrammprodukt zur Implementation dieses Verfahrens.

### Stand der Technik

Die Verwendung von Auszeichnungssprachen zur Erfassung und Strukturierung von Informationen gewinnt fortwährend an Bedeutung. Die Generierung, aber auch das Auslesen und Verwenden der in Auszeichnungssprachen-Dokumenten abgelegten Informationen kann jedoch rasch die Grenzen generischer Prozessoren zu deren Bearbeitung und auch Begrenzungen beim standardisierten Sprachumfang bestimmter Auszeichnungssprachen aufzeigen und zur Notwendigkeit ergänzender Datenverarbeitungsprogramme führen, um verwertbare Informationen ablegen und abrufen zu können. Im folgenden soll diese Problematik an einem Beispiel aus dem Bereich der Energieerzeugung und - Verteilung erläutert werden, wobei vergleichbare Probleme auch in anderen Bereichen auftreten können und die vorliegende Erfindung auch auf die Lösung in diesen Bereichen gerichtet sein soll.

Die Norm IEC 61850 kann als der zukünftige Standard für den Datenaustausch in der Stationsleittechnik angesehen werden. Sie soll herstellerunabhängige Anwendungsinteroperablilität zwischen den verschiedenen Komponenten und Vorrichtungen eines Stationsleitsystems (Substation Automation System, SAS) ermöglichen. Teil 6 dieser Normung spezifiziert die Substation Configuration Language (SCL), um den interoperablen Austausch von Kommunikationssystemkonfigurationsdaten zwischen Vorrichtungen und Systemkonfigurationswerkzeugen verschiedener Hersteller zu gestatten. Unter Verwendung von SCL können verschiedenste Aspekte eines Stationsleitsystems beschrieben werden, wie beispielsweise:

Die Konfigurationen der vorhandenen intelligenten elektronischen Vorrichtungen,
die Konfigurationen des Kommunikationssystems,
die Topologie der Schaltanlage, und
ihre Relationen zu der auf den internen elektrischen Vorrichtungen implementierten Funktionalität.

Um Kompatibilität mit den wichtigen informationstechnologischen Standards zu gewährleisten, basiert SCL auf der Seitenbeschreibungssprache XML (extensible markup language) in der Version 1.0. Teil 6 der IEC 61850 enthält eine Dokumententypdefinition (DTD), welche die spezifische XML-Syntax von SCL-Dokumenten und deren Semantik definiert.

Die an Hand der SCL beschreibbaren Konfigurationszustände eines Stationsleitsystems werden mithin in Form von SCLkonformen XML-Dokumenten abgelegt.

XML ist ein Standard zur Darstellung von Informationen in Dokumentenform. XML gehört zu den sogenannten Auszeichnungssprachen, welche der Strukturierung von Dokumenten oder allgemeiner Informationen dienen. Man unterscheidet hierbei sogenannte Meta-Sprachen, welche das Definieren verschiedener Auszeichnungssprachen ermöglichen bzw. zu ihrem Einsatz einer Konkretisierung in Form von Befehls- bzw. Bezeichnerdefinitionen für die Elemente bedürfen, und eigentlichen Auszeichnungssprachen, welche konkreter auf die Strukturierung eingehen, indem sie einen vorgegebenen Bezeichner- bzw. Befehlsumfang aufweisen. Zu den Auszeichnungssprachen gehören beispielsweise GML, SGML, HTML, XHTML und eben XML. XML-Dokumente sind Dokumente, die Daten strukturieren, sie jedoch nicht formatieren. Die einzelnen Einträge eines XML-Dokuments sind vielmehr bestimmten Bedeutungsinhalten zugeordnet. XML ermöglicht die Strukturierung von Informationen nach ihrem Sinngehalt, und geht damit beispielsweise über den parallel entwickelten Standard HTML hinaus, welcher bei einem vorgegebenen Befehlsumfang nur einfache Informationsstrukturierungen und im wesentlichen Informationen zur Darstellung des Dokuments z.B. von Zeichen oder deren Größe) festlegt. Die einzelnen Einträge beziehungsweise Elemente eines XML-Dokuments bestehen in der Regel aus einem Befehl, der auch als "Tag" bezeichnet wird, und der beispielsweise die Bedeutung einer bestimmten Information repräsentieren kann, sowie aus Daten, beispielsweise Textketten, auf die der Befehl des Eintrags anzuwenden ist. Ein sogenanntes wohlgeformtes XML-Dokument enthält zumindest einen sogenannten Prolog, in dem beispielsweise die Version von XML angegeben wird, und ein weiteres Element. Die XML-Spezifikation legt hierbei lediglich fest, wie XML-Dokumente zu erstellen sind, jedoch nicht was, das heißt welche Art von Informationen, in einem XML-Dokument gespeichert werden können. Die Definition solcher zulässigen Tags erfolgt vielmehr über Dokumententypdefinitionen (DTD), welche Definitionen der zulässigen Einträge in einem XML-Dokument, welches konform einer jeweiligen DTD ist, angibt. Unter einer Dokumententypdefinition ist im Sinne der vorliegenden Erfindung jede erweiternde Definition der Struktur von Auszeichnungssprachen-Dokumenten zu verstehen, unabhängig davon, ob solche Erweiterungen bei der Definition der Auzeichnungssprache vorgesehen sind oder nicht (d.h. über den "erlaubten" Umfang der Sprachdefinition hinausgehen).

Eine solche DTD stellt eben die Definition von SCL-Dokumenten dar. Falls ein XML-Dokument nicht nur wohlgeformt ist, sondern sich zusätzlich auch an die Regeln einer vorhandenen DTD hält, so spricht man von einem gültigen Dokument. Auf die DTD wird entweder im Prolog verwiesen, oder sie kann im Dokument enthalten sein.

Um XML-Dokumente (oder Dokumente anderer Auszeichnungssprachen) erstellen, lesen und modifizieren zu können, wurden verschiedene Programmierschnittstellen entwickelt. Dabei handelt es handelt es sich um sogenannte Applikationsprogrammierungs-Interfaces (API). Eine API definiert die Regeln und Konventionen, welche beschreiben, wie ein Stück Software von einem anderen Stück Software verwendet werden kann. Bei Zugriff über eine solche API werden die Daten in XML-Dokumenten beispielsweise in baumartigen verzweigten Strukturen (der sogenannte Parse-Baum) mit Knoten repräsentiert, die mittels geeigneter Programme interpretiert werden können. Eine dieser API ist das Dokument-Objektmodell (DOM). Die Verwendung der DOM-API erfordert also die Navigation durch XML-Dokumente in Begriffen von generischen Knoten, wobei ein Knoten einem Element, einem Attribut, einem Kommentar, etc. entsprechen kann. Die eigentlichen XML-Daten, das heißt die Werte der Attribute und Elemente, werden als Zeichenketten hin und her transferiert.

Neben DOM existieren weitere Spezifikationen von Schnittstellen, beispielsweise die Erweiterungen DOM Level 2, der Simple API for XML (SAX), oder der Java API for XML-Parsing (JAXP).

DOM und andere APIs zum Zugriff auf Dokumente im Format einer Auszeichnungssprache sind lediglich Spezifikationen, welche in konkrete Programme umgesetzt werden müssen. Als solche dienen sogenannte Prozessoren, welche in der Lage sind, den Inhalt von z.B. XML-Dokumenten zu erfassen und API aufrufenden Programmen so zu präsentieren, daß er der DOM-Spezifikation oder einer anderen API entspricht. Über eine API-konforme Schnittstelle können also andere Programme Anfragen an den XML-Prozessor stellen, indem sie diesem über die Schnittstelle Informationen zusenden, welche im API-Format gehaltene Befehle und/oder Inhalte, wie Text oder ähnliches beinhalten. Auf das Übersenden von Informationen, welche Anfragen zu der Struktur eines XML-Dokuments beinhalten, antwortet der Auszeichnungssprachen-Prozessor mit dem Übersenden von Rückinformationen, welche dem abfragenden Programm Aufschluß über die Strukturierung des bearbeiteten Auszeichnungssprachen-Dokuments liefern.

Derzeitig existierende API-konforme Auszeichnungssprachen-Prozessoren, beispielsweise ein von der Firma Microsoft erhältlicher XML-Prozessor, sind allerdings generisch in dem Sinne, daß sie keine Unterstützung für eine spezifische DTD bieten. Dies bedeutet beispielsweise, daß Attributwerte nicht gegen den Attributtyp überprüft werden, so daß beispielsweise in einem Element, welches als ENUM gekennzeichnet ist, jeder beliebige NMTOKEN auftauchen kann. Eine Überprüfung, ob dieser Wert in der Liste der erlaubten Werte enthalten ist, findet nicht statt.

Weiterhin werden Inhaltsbeschränkungsregeln (containment constraint rules), welche den mehrfachen oder konditionalen Inhalt von einem Element definieren, nicht geprüft und es finden keine spezifischen, semantischen Prüfungen statt, beispielsweise, ob das Attribut "Voltage" wirklich eine Zahl zusammen mit einer Spannungseinheit enthält. Unter Verwendung eines generischen API-konformen Auszeichnungssprachen-Prozessors können mithin Dokumente (mit einer bestimmten DTD), beispielsweise SCL-Dokumenten erstellt werden, die wohlgeformte XML-Dateien sind. Es gibt jedoch keine Garantie, daß ein solches Dokument auch eine gültige XML-Datei, beispielsweise eine gültige SCL-Datei, ist. Selbst wenn die Datei gültig sein sollte, besteht keine Garantie für eine semantische Korrektheit. Nur beim Laden eines bestimmten Auszeichnungssprachen-Dokuments überprüft ein generischer Auszeichnungssprachen-Prozessor diese gegenüber der verwendeten DTD, beispielsweise der SCL-DTD, wobei jedoch keine spezifischen Fehlerinformationen gegeben werden. Die semantische Korrektheit kann anhand der DTD nicht geprüft werden, da eine DTD nur die Syntax, nicht aber die Semantik von Auszeichnungssprachen-Dokumenten definiert.

Für die Konfiguration eines Stationsleitsystems würde dies bedeuten, daß durch ein Konfigurationswerkzeug mit einem generischen XML-Prozessor erzeugte SCL-Dateien eventuell ungültig oder semantisch inkorrekt sein könnten. Falls eine auf solche Art erzeugte Datei einem zu konfigurierenden intelligenten elektronischen Gerät zugeleitet wird, könnte folgendes passieren:
- Im Fall, daß die SCL-Datei ungültig ist, könnte ihr Laden in das Gerät scheitern.
- Im Fall, daß die SCL-Datei semantisch inkorrekt ist, würde die Konfiguration des intelligenten elektronischen Geräts fehlschlagen, oder es könnte zu einer fehlerhaften Konfiguration des intelligenten elektronischen Geräts kommen.

Um diese nachteilige Situation zu vermeiden, wird im Stand der Technik jedes Konfigurationswerkzeug und die Software jedes konfigurierbaren Geräts, welche SCL-Dateien lesen oder schreiben mit einem eigenen spezifischen SCL-Modul ausgestattet, welches die SCL-Syntax und Semantik bei der Erzeugung oder beim Auslesen von SCL-Dateien überprüft.

Dies ist mit einem erhöhten Programmieraufwand verbunden und kann zudem auf Grund der unterschiedlichen Implementierungen möglicherweise zu Inkompatibilitäten, zum Beispiel beim Bearbeiten von Dateien durch mehrere Geräte, führen.

Es ist daher die Aufgabe der vorliegenden Erfindung, ein verbessertes System bereitzustellen, mit dem die Korrektheit von Auszeichnungssprachen-Dokumenten, die einer bestimmten DTD genügen sollen, sichergestellt ist.

### Darstellung der Erfindung

Diese Aufgabe wird gelöst durch die Bereitstellung eines Prä-Prozessors für eine vorgegebene Dokumententypdefinition gemäß dem unabhängigen Patentanspruch 1, ein System zum Bearbeiten von Auszeichnungssprachen-Dokumenten gemäß dem unabhängigen Patentanspruch 14, ein Verfahren zur Erzeugung von Auszeichnungssprachen-Dokumenten gemäß dem unabhängigen Patentanspruch 21, sowie ein Computerprogrammprodukt gemäß dem unabhängigen Patentanspruch 27. Weitere vorteilhafte Ausgestaltungen, Aspekte und Details der vorliegenden Erfindung ergeben sich aus den abhängigen Patentansprüchen, der Beschreibung und der beigefügten Zeichnung.

Der Aufgabe liegt das Prinzip zugrunde, einen spezifischen Prä-Prozessor zur Verfügung zu stellen, welcher einerseits in der Lage ist, mit einem generischen Auszeichnungssprachen-Prozessor Daten auszutauschen und über diesen korrekte DTD-konforme Auszeichnungssprachen-Dokumente zu erstellen, beziehungsweise auszulesen, und auf der anderen Seite eine Schnittstelle zu beliebigen Anwendungsvorrichtungen bereitzustellen. Es versteht sich, daß die vorliegende Erfindung nicht auf die Prozessierung von SCL-Dokumenten beschränkt ist, auch wenn im einleitenden Teil die existierende Problematik im Hinblick auf SCL-Dokumente in der Stationsleittechnik eingeführt worden ist. Vielmehr ist die vorliegende Erfindung grundsätzlich bei der Bearbeitung von Auszeichnungssprachen-Dokumenten anwendbar, bei denen sich die Frage der Korrektheit und Konformität zu einer spezifischen DTD stellt.

Durch die zunehmende Verbreitung von Auszeichnungssprachen wie XML, SGML oder HTML ergibt sich für die Erfindung ein breites Einsatzgebiet.

Die Erfindung ist daher gerichtet auf einen Prä-Prozessor für eine vorgegebene Dokumententypdefinition (DTD) aufweisend zumindest eine vorgegebene Schnittstelle zum Austauschen von Informationen mit Schnittstellen von Anwendungseinheiten, und ein Konversionsmittel zur Umwandlung von Anwendungsinformationen von einer Anwendungseinheit in Aufrufe an einen Auszeichnungssprachen-Prozessor, wobei die Aufrufe zugleich der verwendeten DTD genügen, und zur Umwandlung von Auszeichnungssprachen-Informationen vom Auszeichnungssprachen-Prozessor in Rückinformationen zur Übertragung an eine Anwendungseinheit, wobei die umgewandelten Rückinformationen von der Anwendungseinheit interpretierbar sind.

Unter einem Prä-Prozessor wird in der vorligenden Erfindung, wie auf dem Gebiet der Datenverarbeitung allgemein, ein Programmobjekt verstanden, welches eingehehende Daten anhand bestimmter Kriterien umwandelt und die gewandelten Daten ausgibt.

Der Prä-Prozessor weist eine vorgegebene Schnittstelle zur Verbindung mit Anwendungseinheiten auf. Dies führt vorteilhafterweise dazu, daß man nach Definition dieser Schnittstelle von den verschiedensten Anwendungseinheiten auf den Prä-Prozessor zugreifen kann. Dadurch wird das im Stand der Technik bekannte Problem der Neuprogrammierung entsprechender Software-Module in jeder einzelnen Anwendungseinheit vermieden. Bei der Programmierung der Anwendungseinheiten muß dann lediglich eine (einfachere) Funktionalität zum Aufrufen der vorgegebenen Schnittstelle des Prä-Prozessors implementiert werden.

Der erfindungsgemäße Prä-Prozessor kann in funktionneller Einheit mit dem generischen Auszeichnungssprachen-Prozessor realisiert sein. Hierunter ist zu verstehen, daß die beiden Funktionalitäten in einem einzigen Software-Objekt vereinigt sind, so daß die Kommunikation zwischen den beiden Teilen intern gelöst werden kann, ohne das bestimmte, definierte Schnittstellen eingeführt werden müssen.

Alternativ kann der Prä-Prozessor zwischen verschiedene Anwendungseinheiten, die ihn verwenden können, und einen üblicherweise generischen Auszeichnungssprachen-Prozessor eingesetzt und mit beiden über Schnittstellen gekoppelt werden. Auf diese Weise ist es möglich, einen existierenden, generischen Auszeichnungssprachen-Prozessor zu verwenden, so daß der Programmieraufwand zur Implementierung der Erfindung deutlich reduziert wird.

Der Prä-Prozessor beinhaltet ein Konversionsmittel, welches die verschiedenen Strukturen der zwischen den Anwendungsvorrichtungen und dem Auszeichnungssprachen-Prozessor ausgetauschten Informationen jeweils den Notwendigkeiten der Gegenseite anpaßt und zudem die dem Auszeichnungssprachen-Prozessor zugeleiteten Aufrufe so aufbereitet, daß sie der jeweils verwendeten DTD entsprechen. Der Begriff der Anwendungseinheit ist hierbei denkbar weit zu fassen und beinhaltet neben Konfigurationswerkzeugen, wie Programmen eines Leitrechners oder spezieller mobiler Konfigurationsgeräte auch konfigurierbare, intelligente elektronische Geräte der Stationsleittechnik, das in der Stationsleittechnik verwendete Kommunikationssystem und alle weiteren Elemente.

Bei Anwendungen außerhalb der Stationsleittechnik ist unter einer Anwendungseinheit jegliche Einheit zu verstehen, sei diese hardwaretechnischer (beispielsweise bei Geräten mit einem eingebauten ASIC zur Bearbeitung von Auszeichnungssprachen-Dateien) oder softwaretechnischer Natur, welche mit Auszeichnungssprachen-Dokumenten, welche einer bestimmten DTD genügen müssen, operiert.

Der Auszeichnungssprachen-Prozessor ist ein Prozessor, der in der Lage ist, Dateien in dem Format der Auszeichnungssprache zu bearbeiten, d.h. zu erzeugen, zu modifizieren und auszulesen. Die vom Auszeichnungssprachen-Prozessor prozessierten Dateien können die unterschiedlichsten Informationen über ein oder mehrere zu konfigurierende Geräte enthalten.

Vorzugsweisse interagiert der Prä-Prozessor mit einem Auszeichnungssprachen-Prozessor, der konform zu einer vorgegebenen API ist, wobei der Prä-Prozessor zumindest eine Schnittstelle zum Senden von Aufrufen an den Auszeichnungssprachen-Prozessor und zum Empfangen von Auzeichnungssprachen-Informationen vom Aufzeichnungssprachen-Prozessor aufweist; und die Aufrufe API-konforme Aufrufe sind.

API-konform bedeutet im Sinne der vorliegenden Erfindung, daß der Auszeichnungssprachen-Prozessor eine Programmier-Schnittstelle aufweist, welche Methodenaufrufe entgegennehmen und Informationen ausgeben kann, die der Definition einer bestimmten API entsprechen. Der Datenaustausch erfolgt also über die API-konforme Schnittstelle des Auszeichnungssprachen-Prozessors, so daß der Prä-Prozessor in der Lage sein muß, entsprechende Befehle zu generieren.
Bevorzugterweise ist die verwendete Auszeichnungssprache XML, da dieses ein etablierter Standard ist, in einfacher Weise die Strukturierung von Informationen gestattet, existierende Software einfach angepasst werden kann, und die Sprache aufgrund ihrer Bekanntheit gut verstanden ist.

Das verwendete API kann jedes geeignete API sein, das die verwendete Auszeichnungssprache wiedergeben kann und die notwendigen Manipulationen an den Dokumenten erlaubt, wie beispielsweise SAX oder DOM bei der Verwendung von XML.

Der erfindungsgemäße Prä-Prozessor kann vorzugsweise ein SCL-Prä-Prozessor sein, d.h. zur Aufbereitung von Informationen dergestalt geeignet sein, daß er ihre Konformität mit der SCL-DTD überprüft, bevor er diese an eine abfragende Anwendungseinheit weitersendet und damit Fehlkonfigurationen verhindern kann. Die Verwendung eines Prä-Prozessors speziell zum Generieren und Auslesen von SCL-Dokumenten löst unerwarteterweise verschiedene, im Stand der Technik wahrgenommene Probleme, wie oben beschrieben, und vereinfacht damit die Konzeption und Realisation von Verwaltungssystemen der Stationsleittechnik.

Zwischen den Anwendungseinheiten, dem erfindungsgemäßen Prä-Prozessor und dem Auszeichnungssprachen-Prozessor werden Informationen versandt, welche über die Schnittstellen geleitet werden. Hierbei können verschiedene Informationen unterschieden werden. Die von einer Anwendungseinheit zum Prä-Prozessor gesandte Information wird erfindungsgemäß als eine Anwendungsinformation bezeichnet. Die Übertragung dieser Information sollte in einem standardisierten Format erfolgen, welches der softwareseitigen Schnittstelle des Prä-Prozessors entspricht. Die Anwendungsinformationen enthalten in der Regel Anweisungen für Manipulationen der Auszeichnungssprachen-Datei. Ist die Anwendungseinheit ein Konfigurationswerkzeug, können als Anwendungsinformationen die Eingabeparameter des Konfigurationswerkzeugs gegeben sein, welche zusammen mit entsprechenden Anweisungen zur Manipulation der Auszeichnungssprachen-Datei an den Prä-Prozessor gesandt werden. Handelt es sich bei der Anwendungseinheit um ein intelligentes elektronisches Gerät, kann eine typische Anwendungsinformation beispielsweise eine Abfrage bezüglich Inhalten der Auszeichnungssprachen-Datei sein. Im einen Fall werden neben reinen Anweisungen also ebenfalls Strukturinformationen, das heißt Informationen über den tatsächlichen Inhalt einer zu erstellenden Auszeichnungssprachen-Datei und den syntaktischen Zusammenhang zwischen solchen Informationen, übersandt, im anderen Fall hingegen lediglich eine Anweisung.

Vorzugsweise können die Anwendungsinformationen Gerätekonfigurationsparameter zum Erstellen eines Auszeichnungssprachen-Dokuments für die Konfiguration von zumindest einem konfigurierbaren Gerät enthalten.

Im Konversionsmittel werden die Anwendungsinformationen in Methoden-Aufrufe umgewandelt, die an den Auszeichnungssprachen-Prozessor übersandt werden können. In diesem Umwandlungsprozeß werden die Anwendungsinformationen zugleich in eine Form gebracht, welche konform zur verwendeten DTD ist, um nicht nur eine wohlgeformte, sondern ebenfalls eine gültige Auzeichnungssprachen-Datei zu erhalten.

In der entgegengesetzten Richtung treten vom Auszeichnungssprachen-Prozessor gesandte Auszeichnungssprachen-Informationen, wie beispielsweise Informationen über die Strukturierung des bearbeiteten Auszeichnungssprachen-Dokuments in einem API-konformen Format auf. Der Auszeichnungssprachen-Prozessor sendet also über die Schnittstelle beispielsweise Informationen über die generischen Knoten, wie Elemente, Attribute, Kommentare, etc.

Das erfindungsgemäße Konversionsmittel wandelt diese Informationen in Rückinformationen um, welche an eine Anwendungseinheit gesendet werden können. Es muß angemerkt werden, daß diese Anwendungseinheit nicht identisch sein muß mit der zuvor erwähnten Anwendungsvorrichtung, die Informationen aussendet. So wird es in der Praxis gerade im Bereich von Anlagensteuerungen häufig vorkommen, daß eine erste Anwendungseinheit, beispielsweise ein Konfigurationsprogramm auf einer Datenverarbeitungsanlage, eine Konfigurations-Datei im Auszeichnungssprachenformat und beispielsweise konform zu SCL, erstellt bzw. modifiziert, und eine zweite Anwendungeinheit, beispielsweise ein konfigurierbares Gerät in einer Unterverteilstation, Daten dieser Datei einliest, um sich entsprechend zu konfigurieren.

Erfindungsgemäß wird es bevorzugt, daß die Rückinformationen Strukturinformationen über eine vom Auszeichnungssprachen-Prozessor bearbeitete DTD-konforme Auszeichnungssprachen-Datei enthalten. Diese Strukturinformationen können wiederum Bezeichnerinformationen, also sogenannte Tags, und/oder Inhaltsinformationen, beispielsweise bei Verwendung von SCL-Dateien Informationen über Konfigurationen, enthalten. Die Rückinformationen können also Gerätekonfigurationsparameter eines existierenden Auszeichnungssprachen-Dokuments für die Konfiguration von zumindest einem konfigurierbaren Gerät enthalten.

Diese Geräte-Konfigurationsparameter als Rückinformationen, beziehungsweise allgemeiner jeglicher Art von Rückinformationen, werden vom Konversionsmittel umgewandelt in umgewandelte Rückinformationen, welche von der Anwendungsvorrichtung interpretierbar sind. Diese Umwandlung in umgewandelte Rückinformationen beinhaltet zum einen eine Formatumwandlung der API-kompatiblen Rückinformationen in ein Parameterformat, welches von der jeweiligen Anwendungseinheit ebenfalls verwendet wird.

Desweiteren beinhaltet die Umwandlung in umgewandelte Rückinformationen jedoch vorzugsweise ebenfalls eine Überprüfung bezüglich der DTD-Konformität der gesendeten Informationen, um sicherzustellen, daß über das reine Format hinausgehend auch syntaktische und semantische Bedingungen der an die Anwendungsvorrichtung rückgesandten Rückinformationen erfüllt sind.

Es wird daher bevorzugt, daß das Konversionsmittel aufweist Mittel zur Überprüfung der Syntax der empfangenen Informationen auf Konformität mit der DTD und der Semantik auf Übereinstimmung mit den Bedingungen der jeweils zu konfigurierenden Anwendungseinheit. Diese Prüfung erfolgt sowohl hinsichtlich der Anwendungsinformationen als auch hinsichtlich der von Auszeichnungssprachen-Prozessor gesandten Rückinformationen. Auf diese Weise kann sichergestellt werden, daß die Syntax der übersandten Informationen in einer Art und Weise der verwendeten DTD entsprechen, daß einerseits die Anwendungseinheiten verwertbare Informationen erhalten und andererseits der Auszeichnungssprachen-Prozessor in der Lage ist, gültige Auszeichnungssprachen-Dokumente im jeweiligen DTD-Format zu erzeugen.

Auch beim Vorliegen eines gültigen Auszeichnungssprachen-Dokuments einer spezifischen DTD kann es noch vorkommen, daß die übersendeten Informationen aus verschiedenen Gründen inkorrekt oder unzulässig sind. So können beispielsweise auch bei Übereinstimmung des Typs der versandten Informationen mit dem Typ des für sie zuständigen Bezeichners die tatsächlich übersandten Informationen außerhalb eines überhaupt möglichen Wertebereichs liegen. Bei Verwendung des Auszeichnungssprachen-Dokuments würden dann wiederum Fehler auftreten. Es wird daher bevorzugt, daß die Konversionsmittel Mittel zur Überprüfung der logischen Korrektheit und/oder Zulässigkeit von in den Informationen enthaltenen Strukturinformationen aufweisen. Hierzu kann es notwendig sein, den Prä-Prozessor mit weiteren Informationen zu versorgen, welche beispielsweise bei dem Erstellen von SCL-Dateien gerätespezifische Vorgaben enthalten, da sich die Zulässigkeit von konfigurierbarem Gerät zu konfigurierbarem Gerät unterscheiden kann.

Die Erfindung ist weiterhin auf ein Gesamtsystem gerichtet, welches einen erfindungsgemäßen Prä-Prozessor beinhaltet. Es handelt sich um ein System zum Bearbeiten von gültigen Auszeichnungssprachen-Dokumenten, die konform einer spezifischen Dokumententypdefinition (DTD) sind, wobei das System aufweist eine Anwendungseinheit zum Erstellen und/oder Einlesen eines Satzes von Anwendungsinformationen, einen erfindungsgemäßen Prä-Prozessor, und einen Auszeichnungssprachen-Prozessor zum Austauschen von Informationen mit dem Prä-Prozessor, zur Bearbeitung eines bezüglich der DTD gültigen Auszeichnungssprachen-Dokuments.

Alles zuvor bezüglich des erfindungsgemäßen Prä-Prozessors Gesagte gilt gleichermaßen für das System, so daß auf das Obenstehende vollinhaltlich Bezug genommen wird.

Insbesonder können Prä-Prozessor und Auszeichnungssprachen-Prozessor zu einer funktionellen Einheit zusammengefasst sein.

Es wir ebenso bevorzugt, daß der Auszeichnungsprachen-Prozessor ein generischer Auszeichnungssprachen-Prozessor mit einer API-konformen Schnittstelle zum Prä-Prozessor ist, wie oben detailiert erläutert.

Die Anwendungseinheit kann hierbei erfindungsgemäß ein Konfigurationsprogramm sein oder ein konfigurierbares Gerät. Das System ist also in der Lage, sowohl DTD-konforme Auszeichnungssprachen-Dokumente zu erstellen als auch diese wiederum auszulesen und die Informationen einem zu konfigurierenden Gerät zur Verfügung zu stellen, wenn dieses eine Anfrage stellt.

Die Anwendungsinformationen können Gerätekonfigurationsparameter zur Konfigurierung eines konfigurierbaren Geräts sein.

Dementsprechend kann die vorgegebene DTD beispielsweise die Substation Configuration Language (SCL) sein.

Weiter ist die Erfindung auf ein Verfahren zur Erzeugung von Auszeichnungssprachen-Dokumenten gerichtet, die konform einer vorgegebenen Dokumententypdefinition sind, wobei das Verfahren folgende Schritte aufweist:
- Erstellen eines Satzes von Anwendungsinformationen;
- Erzeugen einer zur vorgegebenen DTD konformen Informations-Repräsentation aus den Anwendungsinformationen; und
- Erzeugen eines bezüglich der DTD gültigen Auszeichnungssprachen-Dokuments aus der Informations-Repräsentation.

Die verwendeten Anwendungsinformationen können vorzugsweise Gerätekonfigurationsparameter für zumindest ein konfigurierbares Gerät sein. Das Erstellen eines Satzes von Gerätekonfigurationsparametern erfolgt üblicherweise in einem Konfigurationsprogramm durch Eingaben eines Benutzers. Aus diesem Gerätekonfigurationsparametern wird eine Parameterrepräsentation erzeugt, welche zur verwendeten DTD konform ist. Dies kann beispielsweise, wie oben besprochen, in einem Prä-Prozessor gemäß der Erfindung geschehen. Die Parameterrepräsentation kann beispielsweise eine Parameterrepräsentation sein, die zu einer bestimmten API konform ist.

In einem letzten Schritt wird die erzeugte Parameterrepräsentation umgewandelt in eine Auszeichnungssprachen-konforme Konfigurationsdatei. Dieser Schritt kann beispielsweise nach Übersenden der Parameterrepräsentation über die API-Schnittstelle in einem üblichen Auszeichnungssprachen-Prozessor geschehen.

Es wird bevorzugt, daß die Gerätekonfigurationsparameter syntaktisch und/oder semantisch überprüft werden, bevor aus ihnen die DTD-konforme Parameterrepräsentation erzeugt wird.

Ebenso ist eine Überprüfung auf einen korrekten Sinngehalt möglich, wie oben bezüglich des Prä-Prozessors beschrieben.

Die Erfindung kann dadurch gekennzeichnet sein, daß das Erzeugen eines gültigen Auszeichnungssprachen-Dokuments folgende Schritte aufweist:
- Erzeugen von Aufrufen aus der DTD-konformen Informations-Repräsentation, die zu einer vorgegebenen API konform sind;
- Übersenden der API-konformen Aufrufe an einen Auszeichnungssprachen-Prozessor über eine zu dieser API konformen Schnittstelle; und
- Ausführen der API-konformen Aufrufe zum Bearbeiten des gültigen Auszeichnungssprachen-Dokuments.

Auch bei dem erfindungsgemäßen Verfahren können die Anwendunginformationen Gerätekonfigurationsparameter für zumindest ein konfigurierbares Gerät sein. Das Erzeugen der API-konformen Anweisungsstrukturen kann mittels eines erfindungsgemäßen Prä-Prozessors erfolgen.

Auch die entgegengesetzte Prozessierungsrichtung, also das Parsen eines Auszeichnungssprachen-Dokuments mittels eines Auszeichnungssprachen-Prozessors und die Umwandlung der so erhaltenen Informationen in Anwendungsrückinformationen für die Anwendungseinheit, sollen von der Erfindung miterfasst werden.

Die Erfindung ist schließlich auch auf ein Computerprogrammprodukt gerichtet, welches in einen internen Speicher eines digitalen Datenverarbeitungsmittels ladbar ist, und Computerprogrammcodemittel aufweist, die, wenn sie in einem oder mehreren Datenverarbeitungsmitteln geladen und ausgeführt werden, das Verfahren gemäss der Erfindung ausführen. Das Computerprogrammprodukt beschreibt respektive implementiert also den Prä-Prozessor gemäss der Erfindung. Das Computerprogrammprodukt weist vorzugsweise ein computerlesbares Medium mit einem darauf gespeicherten Computerprogramm zur Ausführung des Verfahrens gemäss der Erfindung auf.

### Kurze Beschreibung der Zeichnung

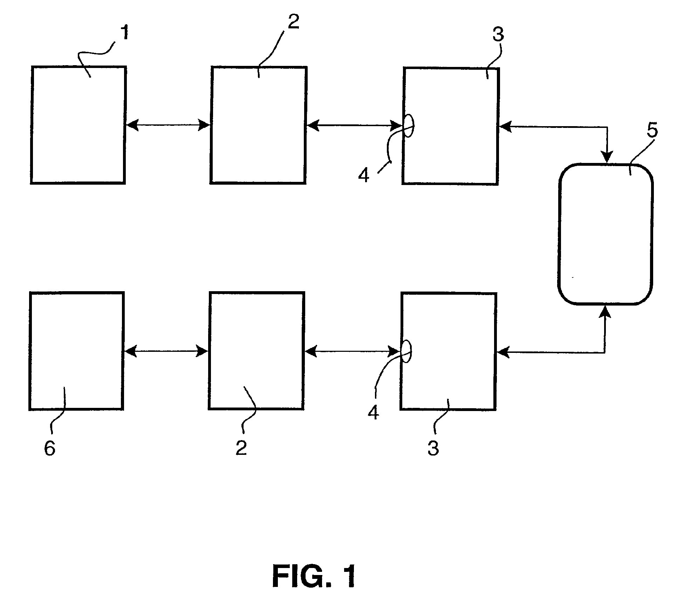

Figur 1 zeigt schematisch die Anordnung der verschiedenen Elemente des erfindungsgemäßen Umwandlungssystems.

### Wege zur Ausführung der Erfindung

Der erfinderische Grundgedanke liegt darin, einen speziellen wiederverwendbaren Prä-Prozessor, beispielsweise einen SCL-Prozessor, als ein Software-Produkt zur Verfügung zu stellen, welches bei jeglicher Software (Anwendungseinheit), welche auf die jeweiligen Auszeichnungssprachen-Dokumente zugreift, verwendet werden kann. Dieser Prä-Prozessor kann beispielsweise mittels Microsoft(TM), COM-Komponenten, den Scriptsystemen PHP oder Perl oder mittels Java(TM) Klassen implementiert werden.

Wichtige Merkmale dieses Prä-Prozessors sind:
alle notwendigen syntaktischen und□ semantischen Überprüfungen werden so früh als möglich durchgeführt. Dies kann durch Bereitstellung spezieller Schnittstellen realisiert werden, welche für jedes in der DTD definierte Element, beispielsweise die SCL-Elemente gemäß der IEC 61850, mit speziellen Methoden zum Setzen von Attributen, Hinzufügen von Elementen, etc. realisiert werden, welche alle notwendigen Schritte durchführen können, und welche im Falle fehlerhafter Eingabeparameter, wie fehlerhafter Anwendungsinformationen oder fehlerhafter API-konformer Informationen des Auszeichnungssprachen-Prozessors, eine Fehlermeldung rückgeben können.

Weiterhin kann der Prä-Prozessor so ausgestattet werden, daß er die Möglichkeiten von Benutzereingaben solcher Art limitiert, daß nur korrekte Informationen in das erzeugte DTD-Dokument eingegeben werden können. Dies kann dadurch erreicht werden, daß nur spezielle DTD-Schnittstellen zugänglich sind, welche zum Beispiel nicht das Hinzufügen eines Attributs erlauben, das für ein gegebenes Element der DTD gar nicht existiert.

Schließlich ist das Bereitstellen von Methoden, die das bequeme Erzeugen von DTD-konformen Auszeichnungssprachen-Dateien, beispielsweise SCL-Dateien, und die Informationsgewinnung aus solchen DTD-konformen Auszeichnungssprachen-Dateien gestattet, ein Merkmal des erfindungsgemäßen Prä-Prozessors in einer bevorzugten Ausführungsform.

Der erfindungsgemäße Prä-Prozessor kann auf einem existierenden generischen Auszeichnungssprachen-Prozessor, beispielsweise einem XML-Prozessor, basieren. Auf diese Weise ist bereits ein großer Teil der Funktionalität, die notwendig ist, implementiert, da das grundsätzliche Verhalten eines XML-Prozessors und des erfindungsgemäßen Prozessors in einigen Punkten ähnlich sind. Wie bereits erläutert, ist es ebenfalls möglich, einen vorhandenen Auszeichnungssprachen-Prozessor zu erweitern, um die fehlende Funktionalität eines Prä-Prozessors in diesen zu integrieren.

Figur 1 zeigt schematisch einen möglichen Aufbau des erfindungsgemäßen Systems am Beispiel der Verwaltung von Gerätekonfigurationen. In der oberen Zeile wird ein DTD-Dokument erzeugt, indem ein Konfigurationswerkzeug 1 seine Eingabeparameter über eine geeignete Schnittstelle zum Prä-Prozessor 2 sendet. Dieser wandelt die erhaltenen Eingabeparameter in Aufrufe der beispielsweise DOM-APIs um, die über eine weitere Verbindung zu einem generischen Auszeichnungssprachen-Prozessor 3 geschickt wird, der zu diesem Zweck eine API-Schnittstelle 4 zur Verfügung stellt. Aus den übersandten DTD-konformen Geräteparametern generiert der Auszeichnungssprachen-Prozessor nunmehr eine DTD konforme Auszeichnungssprachen-Datei 5. Die erzeugten Informationen werden gegebenenfalls über den Auszeichnungssprachen-Prozessor 3 dem Prä-Prozessor 2 zugeführt, der diese an das Konfigurationswerkzeug 1 übersendet, um beispielsweise eine Anzeige auf dem Bildschirm als Rückkopplung über die Korrektheit der Eingabe zu erreichen.

In der unteren Zeile wird der Zugriff eines konfigurierbaren Geräts beschrieben. Das konfigurierbare Gerät, beispielsweise ein intelligentes elektronisches Gerät 6, stellt über einen Prä-Prozessor 2, welcher identisch sein kann mit dem Prä-Prozessor 2 zur Erzeugung der DTD-konformen Auszeichnungssprachen-Datei, eine Anfrage, die dieser in einen API-konforme Methoden-Aufruf, beispielsweise einen DOM-konforme Aufruf, umwandelt und über die API-konforme Schnittstelle 4 desselben oder eines anderen generischen Auszeichnungssprachen-Prozessors 3 weiterreicht, so daß dieser nach Auslesen der in dem DTD-konformen Dokument enthaltenen Konfigurationsinformationen als API-konforme Informationen aufbereitete Rückinformationen an den Prä-Prozessor 2 senden kann, welcher diese in entsprechende Parameter umwandelt, die dann vom Gerät 6 gelesen werden können, woraufhin dieses sich selbständig konfigurieren kann.

Prä-Prozessor 2 und Auszeichnungssprachen-Prozessor 3 haben in der oberen Zeile der Fig. 1 (Erzeugung) und in der unteren Zeile der Fig. 1 (Auslesen) identische Bezugszeichen, um darzustellen, daß es sich um jeweils denselben Prozessor handeln kann, der beide Arten von Anfragen verschiedener Anwendungseinheiten bearbeiten kann. Es sind jeweils zwei Boxen gezeigt, um andererseits klarzumachen, daß auch verschiedene Prozessoren auf ein Dokument zugreifen dürfen.

Die funktionellen Elemente Prä-Prozessor 2 und Auszeichnungssprachen-Prozessor 3 können zu einer Einheit zusammengefasst werden. In diesem Fall ist es nicht notwendig, einen Auszeichnungssprachen-Prozessor mit einer vorgegebenen API-konformen Schnittstelle 4 zu verwenden, da die Kommunikation der Elemente intern erfolgen kann.

Die Verfügbarkeit des erfindungsgemäßen spezifischen Prä-Prozessors, beispielsweise eines SCL-Prozessors, mit einem SCL-spezifischen Interface, weist verschiedene Vorteile auf. So wird die Fehlerüberprüfung der erzeugten Auszeichnungssprachen-Dateien beim Lesen und Schreiben verbessert. Die Design- und Implementationsaufwände werden durch die Wiederverwendbarkeit des Prä-Prozessors verringert. Somit ist es möglich, neue Produkte rascher auf den Markt zu bringen. Durch die Fokussierung auf wenige Software-Produkte ist es möglich, die Qualität der Software zu verbessern, was wiederum zu einer Senkung des Testaufwands führt. Der erfindungsgemäße Prä-Prozessor kann daher einen wichtigen integralen Bestandteil zukünftiger Stationsleittechnik darstellen und in diesem sowie in weiteren Anwendungsgebieten auch als Software-Produkt auf dem Markt vertrieben werden.

### Bezugszeichenliste

- 1: Konfigurationswerkzeug (Anwendungseinheit)
- 2: Prä-Prozessor
- 3: Auszeichnungssprachen-Prozessor
- 4: API-konforme Schnittstelle
- 5: DTD-konformes Auszeichnungssprachen-Dokument
- 6: Konfigurierbares Gerät

## Patentansprüche

1. Prä-Prozessor (2) für eine vorgegebene Dokumententypdefinition (DTD), aufweisend
zumindest eine vorgegebene Schnittstelle zum Austauschen von Informationen mit Schnittstellen von Anwendungseinheiten (1, 6); und
ein Konversionsmittel zur Umwandlung von Anwendungsinformationen von einer Anwendungseinheit in Aufrufe an einen Auszeichnungssprachen-Prozessor (3), wobei die Aufrufe zugleich der DTD genügen, und zur Umwandlung von Auszeichnungssprachen-Informationen vom Auszeichnungssprachen-Prozessor (3) in Rückinformationen zur Übertragung an eine Anwendungseinheit, wobei die umgewandelten Rückinformationen von der Anwendungseinheit interpretierbar sind.

2. Prä-Prozessor (2) nach Anspruch 1, **dadurch gekennzeichnet, daß** der Auszeichnungssprachen-Prozessor konform zu einer vorgegebenen API ist, der Prä-Prozessor zumindest eine Schnittstelle zum Senden von Aufrufen an den Auszeichnungssprachen-Prozessor und zum Empfangen von Auzeichnungssprachen-Informationen vom Aufzeichnungssprachen-Prozessor aufweist; und die Aufrufe API-konforme Aufrufe sind.

3. Prä-Prozessor (2) nach Anspruch 1 oder 2, **dadurch gekennzeichnet, daß** die Auszeichnungssprache des Auszeichnungssprachen-Dokuments XML ist und der Auszeichnungssprachen-Prozessor (3) ein XML-Prozessor ist.

4. Prä-Prozessor (2) nach Anspruch 3, **dadurch gekennzeichnet, daß** das verwendete API das Document Object Model (DOM) ist.

5. Prä-Prozessor (2) nach einem der Ansprüche 1 bis 4, **dadurch gekennzeichnet, daß** er ein Substation-Configuration-Language (SCL) konformer Prä-Prozessor ist.

6. Prä-Prozessor (2) nach einem der Ansprüche 1 bis 5, **dadurch gekennzeichnet, daß** die Anwendungsinformationen und die Aufrufe Anweisungen enthalten.

7. Prä-Prozessor (2) nach einem der Ansprüche 1 bis 6, **dadurch gekennzeichnet, daß** die Anwendungsinformationen und die Aufrufe Strukturinformationen zum Einbauen in eine vom Auszeichnungssprachen-Prozessor (3) bearbeitete, bezüglich der DTD gültige Auszeichnungssprachen-Datei (5) enthalten.

8. Prä-Prozessor (2) nach einem der Ansprüche 1 bis 7, **dadurch gekennzeichnet, daß** die Rückinformationen Strukturinformationen über eine vom Auszeichnungssprachen-Prozessor (3) bearbeitete, bezüglich der DTD gültige Auszeichnungssprachen-Datei (5) enthalten.

9. Prä-Prozessor (2) nach Anspruch 8, **dadurch gekennzeichnet, daß** die Strukturinformationen Bezeichner-Informationen und/oder Inhaltsinformationen enthalten.

10. Prä-Prozessor (2) nach einem der Ansprüche 1 bis 9, **dadurch gekennzeichnet, daß** die Anwendungsinformationen Gerätekonfigurationsparameter zum Erstellen eines Auszeichnungssprachen-Dokuments (5) für die Konfiguration von zumindest einem konfigurierbaren Gerät (6) enthalten.

11. Prä-Prozessor (2) nach einem der Ansprüche 1 bis 10, **dadurch gekennzeichnet, daß** die Rückinformationen Gerätekonfigurationsparameter eines existierenden Auszeichnungssprachen-Dokuments (5) für die Konfiguration von zumindest einem konfigurierbaren Gerät (6) enthalten.

12. Prä-Prozessor (2) nach einem der Ansprüche 1 bis 11, **dadurch gekennzeichnet, daß** die Konversionsmittel aufweisen Mittel zur Überprüfung der Syntax der empfangenen Informationen auf Konformität mit der DTD.

13. Prä-Prozessor (2) nach einem der Ansprüche 1 bis 12, **dadurch gekennzeichnet, daß** die Konversionsmittel aufweisen Mittel zur Überprüfung der logischen Korrektheit und/oder Zulässigkeit von in den Informationen enthaltenen Strukturinformationen.

14. System zum Bearbeiten von gültigen Auszeichnungssprachen-Dokumenten (5), die konform einer vorgegebenen Dokumententypdefinition (DTD) sind; aufweisend
eine Anwendungseinheit (1, 6) zum Erstellen und/oder Einlesen eines Satzes von Anwendungsinformationen;
einen Prä-Prozessor (2) gemäß einem der Ansprüche 1 bis 13; und
einen Auszeichnungssprachen-Prozessor (3) zum Austauschen von Informationen mit dem Prä-Prozessor (2), zur Bearbeitung eines bezüglich der DTD gültigen Auszeichnungssprachen-Dokuments (5).

15. System nach Anspruch 14, **dadurch gekennzeichnet, daß** Prä-Prozessor (2) und Auszeichnungssprachen-Prozessor (3) zu einer funktionellen Einheit zusammengefasst sind.

16. System nach Anspruch 14, **dadurch gekennzeichnet, daß** der Auszeichnungsprachen-Prozessor (3) ein generischer Auszeichnungssprachen-Prozessor (3) mit einer API-konformen Schnittstelle (4) zum Prä-Prozessor (2) ist.

17. System nach einem der Ansprüche 14 bis 16, **dadurch gekennzeichnet, daß** die Anwendungseinheit ein Konfigurationsprogramm (1) ist.

18. System nach einem der Ansprüche 14 bis 16, **dadurch gekennzeichnet, daß** die Anwendungseinheit ein konfigurierbares Gerät (6) ist.

19. System nach einem der Ansprüche 14 bis 18, **dadurch gekennzeichnet, daß** die Anwendungsinformationen Gerätekonfigurationsparameter zur Konfigurierung eines konfigurierbaren Geräts (6) sind.

20. System nach einem der Ansprüche 14 bis 19, **dadurch gekennzeichnet, daß** die vorgegebene DTD die Substation Configuration Language (SCL) ist.

21. Verfahren zur Erzeugung von Auszeichnungssprachen-Dokumenten (5), die konform einer vorgegebenen Dokumententypdefinition (DTD) sind; mit folgenden Schritten:
- Erstellen eines Satzes von Anwendungsinformationen;
- Erzeugen einer zur vorgegebenen DTD konformen Informations-Repräsentation aus den Anwendungsinformationen; und
- Erzeugen eines bezüglich der DTD gültigen Auszeichnungssprachen-Dokuments (5) aus der Informations-Repräsentation.

22. Verfahren nach Anspruch 21, **dadurch gekennzeichnet, daß** die Anwendungssparameter syntaktisch und/oder semantisch überprüft werden, bevor aus ihnen die DTD konforme Informations-Repräsentation erzeugt wird.

23. Verfahren nach Anspruch 21 oder 22, **dadurch gekennzeichnet, daß** die Anwendungsparameter auf ihren korrekten Sinngehalt überprüft werden, bevor aus ihnen die DTD konforme Informations-Repräsentation erzeugt wird.

24. Verfahren nach einem der Ansprüche 21 bis 23, **dadurch gekennzeichnet, daß** das Erzeugen des gültigen Auszeichnungssprachen-Dokuments (5) folgende Schritte aufweist:
- Erzeugen von Aufrufen aus der DTD-konformen Informations-Repräsentation, die zu einer vorgegebenen API konform sind;
- Übersenden der API-konformen Aufrufe an einen Auszeichnungssprachen-Prozessor (3) über eine zu dieser API konformen Schnittstelle (4);
- Ausführen der API-konformen Aufrufe zum Bearbeiten des gültigen Auszeichnungssprachen-Dokuments (5).

25. Verfahren nach einem der Ansprüche 21 bis 24, **dadurch gekennzeichnet, daß** die Anwendunginformationen Gerätekonfigurationsparameter für zumindest ein konfigurierbares Gerät (6) sind.

26. Verfahren nach einem der Ansprüche 21 bis 25, **dadurch gekennzeichnet, daß** das Erzeugen der API-konformen Aufrufe mittels eines Prä-Prozessors (2) nach einem der Ansprüche 1 bis 13 erfolgt.

27. Computerprogrammprodukt, welches in einen internen Speicher eines digitalen Datenverarbeitungsmittels ladbar ist, und Computerprogrammcodemittel aufweist, die, wenn sie in einem Datenverarbeitungsmitteln geladen und ausgeführt werden, das Verfahren gemäss einem der Ansprüche 21 bis 26 ausführen.
